# EUROPEAN PATENT APPLICATION

(11) **EP 4 683 030 A1**
(43) Date of publication of application: **21.01.2026**
(21) Application number: 24826121.6
(22) Date of filing: 10.05.2024
(51) Int. Cl.: H01M 10/42, H01M 10/04, H01M 50/105, H01M 50/536, G01B 11/02, G01B 11/26, G01N 15/02

(54) **MEASURING APPARATUS FOR SECONDARY BATTERY**

(30) Priority: 20.06.2023 KR 20230079007
(71) Applicant: LG Energy Solution, Ltd., Seoul 07335 (KR)
(72) Inventor: SEON, Sang Ok, Daejeon 34122 (KR)
(74) Representative: Plasseraud IP
(86) International application number: PCT/KR2024/006307
(87) International publication number: WO 2024/262799

(57) **Abstract**

A measuring apparatus for a secondary battery, according to an embodiment of the present invention, comprises: a sensing unit which measures an object; and a housing in which the object is accommodated and which includes an opening so that the object can be sensed by the sensing unit, wherein the sensing unit is disposed outside the housing so as to reduce or prevent foreign matter that is transferred from the inside of the housing to the sensing unit.

## Description

### [TECHNICAL FIELD]

### Cross Citation with Related Application(s)

This application claims the benefit of Korean Patent Application No. 10-2023-0079007 filed on June 20, 2023 in the Korean Intellectual Property Office, the disclosure of which is incorporated herein by reference in its entirety.

The present disclosure relates to a measuring apparatus for secondary battery, and more specifically, to an apparatus that can accurately measure an object such as a secondary battery without being affected by foreign matter such as dust.

### [BACKGROUND]

In modern society, as portable devices such as a mobile phone, a notebook computer, a camcorder and a digital camera, and an energy storage system (ESS) have been daily used, technologies of a field related thereto has been actively developed. In addition, as a secondary battery capable of being charged and discharged is used as a power source for an electric vehicle (EV), a hybrid electric vehicle(HEV), a plug-in hybrid electric vehicle (P-HEV) and the like as a method for solving air pollution and the like caused by existing gasoline vehicles using fossil fuel, a necessity for the development of the secondary battery is increasing.

Currently commercialized secondary batteries include a nickel cadmium battery, a nickel hydrogen battery, a nickel zinc battery, a lithium secondary battery, and the like, and among them, the lithium secondary battery has come into the spotlight because it has advantages, for example, being freely charged and discharged, and having very low self-discharge rate and high energy density.

Such a secondary battery may be classified based on the shape of the exterior material into a can type secondary battery in which the electrode assembly is embedded in a metal can, and a pouch type secondary battery in which the electrode assembly is embedded in a pouch made of an aluminum laminate sheet.

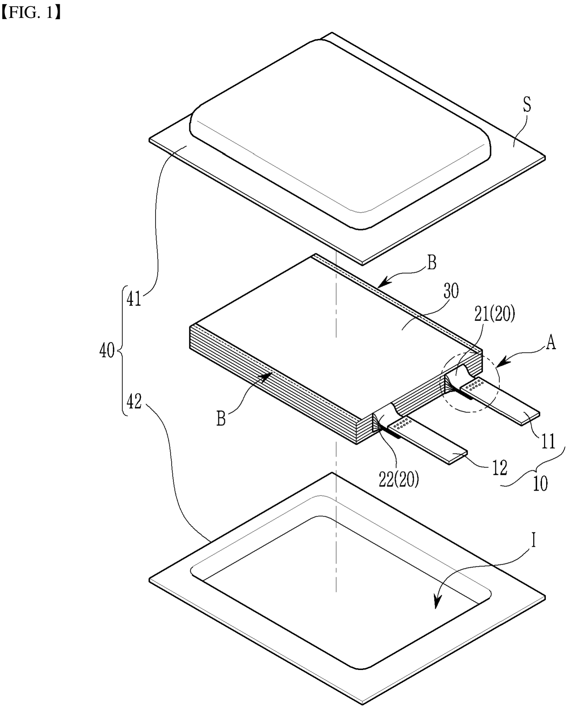

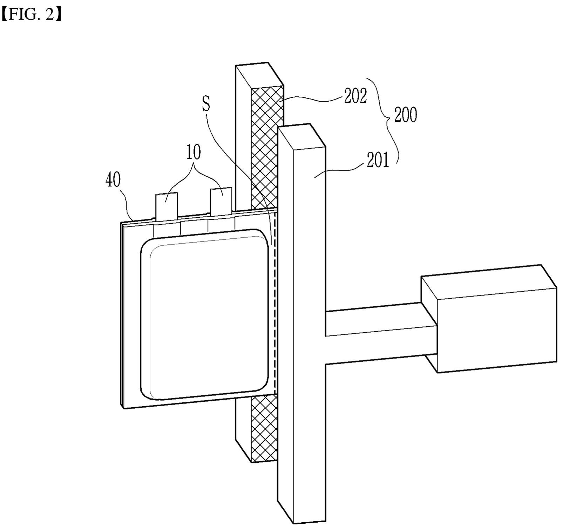

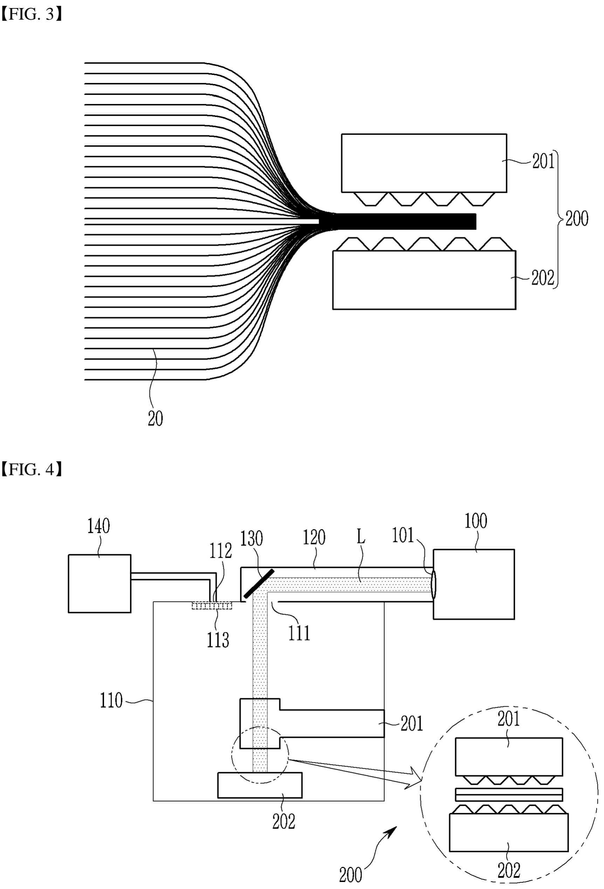

FIG. 1 is an exploded perspective view showing a constitution of a pouch-type secondary battery. FIG. 2 shows the case of welding electrode tabs of the pouch-type secondary battery of FIG. 1. FIG. 3 shows the case of sealing the pouch exterior material of the pouch-type secondary battery of FIG. 1.

As shown in FIGS. 1 and 2, the pouch-type secondary battery may include an electrode assembly 30 and a pouch exterior material 40 that accommodates such an electrode assembly 30.

The electrode assembly 30 has a basic structure of a positive electrode plate and a negative electrode plate each coated with a positive electrode active material and a negative electrode active material, and a separator interposed between them. The electrode assembly 30 includes a coated part to which a positive active material and a negative active material are respectively coated, and an uncoated part to which the active material is not coated and the separator is exposed. The electrode assembly 30 is housed in an internal space I formed in the pouch exterior material 40 together with the electrolyte solution. The pouch exterior material 40 may be formed of an upper pouch 41 and a lower pouch 42, and the outer surfaces of the upper pouch 41 and the lower pouch 42 are provided with a sealing section S, so that the sealing sections S are adhered to each other, and the electrode assembly 30 and the inner space I housing the electrolyte solution may be hermetically sealed.

One or more positive electrode tabs 21 and one negative electrode tab 22 may extend from the positive electrode plate and the negative electrode plate, respectively. Such electrode tabs 20 (positive electrode tab 21 and negative electrode tab 22) can be respectively joined with electrode leads 10 (positive electrode lead 11 and negative electrode lead 12). In addition, a portion of the positive electrode lead 11 and the negative electrode lead 12 are exposed to the outside of the pouch exterior material 40, whereby an electrode terminal may be provided so that it can be electrically connected to the external constitution of the secondary battery, such as another secondary battery or busbar.

FIG. 3 shows a case where a bundle of multiple electrode tabs 20 is joined (welded) to a horn 201 and an anvil 202 of a process device 100 (e.g., a welding device). Similarly, the electrode tab 20 and the electrode lead 10 may also be joined by the horn 201 and the anvil 202, as shown in the portion indicated by A in FIG. 1. Further, FIG. 3 shows a case where the sealing section S of the pouch exterior material 40 is joined (sealed) with the horn 201 and the anvil 202 of the process device 100 (e.g., a sealing device). Similarly, the uncoated part of the electrode assembly 30 may also be joined with the horn 201 and the anvil 202, like the portion indicated by B in FIG. 1.

In the process of manufacturing such secondary batteries, a measuring apparatus such as an object and/or a sensor that measures the object, for example, the lens of the laser light emitting part and/or light receiving part of the measuring apparatus may be exposed to foreign matter such as dust, and if such a measuring apparatus is exposed to foreign matter such as dust, its measurement performance may be degraded or the measuring apparatus may malfunction.

### [DETAILED DESCRIPTION OF THE INVENTION]

### [Technical Problem]

It is an objective of the present disclosure to provide an apparatus that can accurately measure an object even in an environment where foreign matter such as dust is generated.

However, the objective of the present disclosure is not limited to the aforementioned one, and may be extended in various ways within the scope of the technical idea included in the present disclosure.

### [Technical Solution]

According to one embodiment of the present disclosure, there is provided a measuring apparatus for secondary battery comprising: a sensing unit that measures an object, and a housing that houses the object therein, and includes an opening so that the object can be detected through the sensing unit, wherein the sensing unit is disposed outside the housing to thereby reduce or prevent foreign matters inside the housing from being transferred to the sensing unit.

The measuring apparatus for secondary battery further comprises a sensing path part having a passage structure that connects the sensing unit and the opening of the housing, wherein the sensing unit can measure the object inside the housing through the sensing path part.

The sensing unit is a laser sensor or an optical sensor, and the inner wall of the sensing path part may be treated with a dark film.

The measuring apparatus for secondary battery further comprises an optical component inside the sensing path part, wherein the optical component includes at least one of a mirror, a lens, an aperture, and a splitter, and the sensing path from the sensing unit may be folded or bent in a partial section by the optical component to reach the object.

The measuring apparatus for secondary battery further comprises a suction unit that suctions air containing foreign matters inside the housing, wherein the suction unit may be integrated into the housing, or is connected to a suction hole and a pipe or tube provided in the housing.

The suction unit may suction air containing the foreign matters at predetermined time intervals or continuously.

The measuring apparatus for secondary battery further comprises a PM sensor (Particulate Matter Sensor) that measures the concentration of foreign matter inside the housing, wherein if the concentration of foreign matter measured by the PM sensor is higher than a predetermined first concentration, the suction unit operates, and when it is lower than a predetermined second concentration, the suction unit stops, and wherein the first concentration may be higher than the second concentration.

The object is at least one of a battery cell, a component of the battery cell, and a process device for manufacturing the battery cell, and the sensing unit may be a sensor that measures at least one of the distance and angle of the object.

The process device may be at least one of a welding device, a joining device, and a sealing device.

The housing may be made of a transparent material.

The opening is covered with a transparent member, and the housing may be hermetically sealed.

### [Advantageous Effects]

According to the present disclosure, if foreign matters such as dust come into contact with the light emitting part/light receiving part of the measuring apparatus, measurement errors may occur, however, since the measuring apparatus can be protected from environments where foreign matters such as dust are generated, measurement errors or malfunctions of the measuring apparatus can be prevented, thereby improving the quality of the secondary battery produced.

Effects of the present disclosure are not limited to the effects mentioned above, and additional other effects not mentioned herein will be clearly understood by a person of ordinary skill in the art from the description of the appended claims.

### [BRIEF DESCRIPTION OF THE DRAWINGS]

FIG. 1 is an exploded perspective view showing a constitution of a pouch-type secondary battery.
FIG. 2 shows the case of sealing the pouch exterior material of the pouch-type secondary battery of FIG. 1.
FIG. 3 shows the case of sealing electrode tabs of the pouch-type secondary battery of FIG. 1.
FIG. 4 is a schematic diagram of a measuring apparatus according to one embodiment of the present disclosure.
FIG. 5 shows a modification of the measuring apparatus of FIG. 4.
FIG. 6 schematically shows one use state diagram in which the measuring apparatus of FIG. 4 is used in the manufacturing process of a secondary battery.
FIG. 7 schematically shows another use state diagram in which the measuring apparatus of FIG. 4 is used in the manufacturing process of a secondary battery.
FIG. 8 schematically shows yet another use state diagram in which the measuring apparatus of FIG. 4 is used in the manufacturing process of a secondary battery.
FIGS. 9 to 12 exemplarily show methods for measuring an object in the sensing unit of FIG. 4.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are not related to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless explicitly described to the contrary.

Further, throughout the description, when referred to as "planar", it means when a target portion is viewed from the upper side, and when it is referred to as "cross-sectional", it means when a target portion is viewed from the side of a cross section cut vertically.

Now, embodiments of the present disclosure will be described with reference to the accompanying drawings.

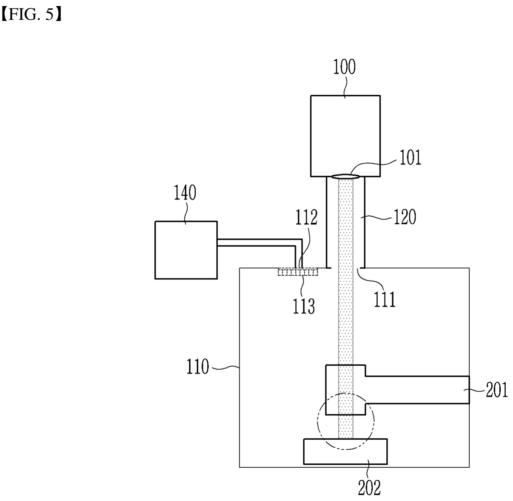

FIG. 4 is a schematic diagram of a measuring apparatus according to one embodiment of the present disclosure, and FIG. 5 shows a modification of the measuring apparatus of FIG. 4.

A measuring apparatus according to one embodiment of the present disclosure comprises a sensing unit 100, a housing 110 that houses an object 200 therein, a sensing path part 120 that connects the sensing unit 100 and the housing 110, and a suction unit 140 that suctions foreign matters such as dust inside the housing 110. In addition, an optical component 130 provided on the sensing path part 120 may be further included.

First, the type of sensing unit 100 that can be applied to the present disclosure is not limited. For example, the sensing unit 100 may be a sensor that can measure the distance and/or angle of the object 200 to be measured as shown in FIG. 4, thereby measuring the degree of alignment of the object 200. As such a sensor, various types of sensors such as a laser sensor, an optical sensor, or an ultrasonic sensor can be applied.

In this specification, the object 200 is the common name of an object to be sensed (measured) by the sensing unit 100. The object 200 may be, for example, a secondary battery itself or a component of the secondary battery, and optionally a process device for manufacturing a secondary battery or a component of the corresponding process device, and is a concept including any object that can be sensed by the sensing unit 100 in the manufacturing process or actual use of the secondary battery. The embodiment of FIG. 4, includes a horn 201 and an anvil 202 corresponding to the process device for manufacturing a secondary battery as an example of the object 200.

The housing 110 may be formed in a box shape so that the object 200 can be housed therein. A mounting part (not shown) may be provided on the inner surface of the housing 110. The housing 110 also includes an opening 111, and a sensing path part 120 for connecting the sensing unit 100 and the housing 110 may be connected to the opening 111. Additionally, the housing 110 includes a suction hole 112, and the suction unit 140 may be connected through the suction hole 112.

First, the housing 110 may be made of a transparent material so that the object 200 can be observed from the outside, and for example, it may be made of a transparent acrylic material or the like. In some cases, the opening 111 may also be covered with a transparent plate or the like in order to hermetically seal the inside of the housing 110. In addition, it is enough for the housing 110 to house the object 200 therein and to have a suitable separation distance between the inner wall of the housing 110 and the object 200 to the extent necessary for air circulation or for work, and the shape and structure of the housing 110 are not particularly limited.

The sensing path part 120 is disposed between the sensing unit 100 and the opening 111 of the housing 110. The sensing unit 100 can measure the object 200 inside the housing 110 through the sensing path part 120. The sensing path part 120 is enough and not particularly limited as long as it connects between the sensing unit 100 and the opening 111 of the housing 110, and has a path structure and shape that does not interfere with the sensing of the sensing unit 100. Further, for example, the sensing unit 100 may be a laser sensor or an optical sensor, and as shown in FIGS. 4 and 5, when the sensing unit 100 is a laser sensor, a laser L is emitted to measure the object 200. At this time, the laser L may pass through the sensing path part 120. Alternatively, when the sensing unit 100 is an optical sensor, the part marked by a laser L can be understood as an optical path. When the sensing unit 100 is a laser sensor or an optical sensor, the inner wall surface of the sensing path part 120 may be treated with a dark film so as to prevent the laser L from being emitted outside the sensing path part 120.

Depending on the arrangement of the sensing path part 120, the laser L emitted from the sensing unit 100 may reach directly to the object 200 as shown in FIG. 5, but the laser L may be reflected or refracted without reaching directly to the object 200 as shown in FIG. 4. That is, as in the case of FIG. 4, the sensing path (e.g., the path of the laser L) of the sensing unit 100 - the opening 111 of the housing 110 - the object 200 is not formed as one straight line, and may be folded or bent in a partial section. Generally, foreign matter such as dust also has the property of advancing straight, and therefore, when the sensing path part 120 is arranged as shown in FIG. 4, relatively little or no foreign matter such as dust may reach the sensing unit 100.

In the latter case, an optical component 130 may be included on the sensing path part 120 as shown in FIG. 4. The embodiment of FIG. 4 illustrates a case where an optical mirror is disposed as an example of the optical component 130, and the laser L emitted from the light emitting part 101 of the sensing unit 100 is reflected at a right angle by the optical component 130 to reach the object 200. Of course, the laser L again reflected by the object 200 is similarly reflected at a right angle by the optical component 130 to reach the light receiving part 101 of the sensing unit 100.

The optical component 130 is not limited to those shown in the figure, and may be provided in plurality. It can be modified and changed in various ways to suit the environment in which the invention is implemented, for example, it may include at least one of a mirror, a lens, an aperture, and a splitter.

The housing 110 can further include a suction hole 112. In the suction hole 112, a suction unit 140 for suctioning foreign matter such as dust inside the housing 110 may be disposed, or may be connected via a tube or the like.

The position and number of the suction hole 112 are not limited, and any position capable of suctioning foreign matter such as dust inside the housing 110 is sufficient. The suction hole 112 may be located, for example, in a place where the object 200 is located, in a place where a large amount of dust or foreign matter is generated, or near the opening 111 to which the sensing path part 120 is connected.

The suction unit 140 may be integrated into the housing 110, or may be arranged outside the housing 110 and connected to the suction hole 112 of the housing 110 through a pipe or tube, as shown in FIGS. 4 and 5.

The suction hole 112 may further include a filter 113 or the like. The filter 113 may be, for example, a dust filter.

The suction unit 140 can suction air containing foreign matter such as dust inside the housing 110. For example, a vacuum pump or the like can be used to suction air containing foreign matter such as dust inside the housing 110. The suction unit 140 can operate at predetermined time intervals or continuously. Alternatively, for example, a PM sensor (Particulate Matter Sensor) (not shown) for measuring dust or the like may be provided in the inside of the housing 110. The suction unit 140 may operate when the concentration of foreign matter such as dust detected by the PM sensor becomes higher than a predetermined first concentration, and may stop when the concentration reaches a predetermined second concentration. Herein, the first concentration is higher than the second concentration, and can be set in various ways in accordance with the environment in which the invention is implemented. Similarly, the operating method of the suction unit 140 is not limited to those described above, and can be modified and changed in various ways in accordance with the various environments in which the invention is implemented.

In addition, the housing 110 can be modified and changed in various ways, for example, it may be further equipped with a temperature controller or a cooling fan (not shown).

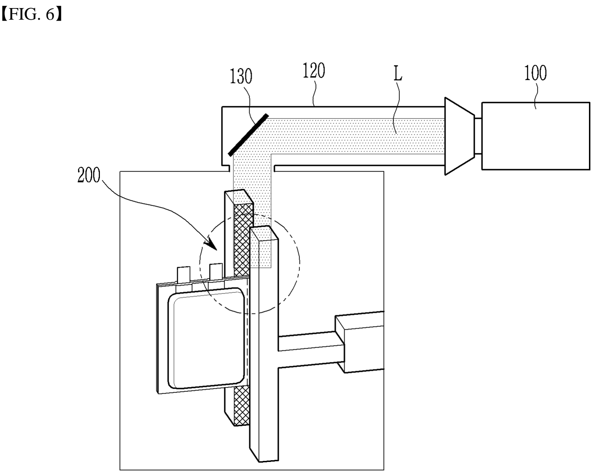

FIGS. 6 to 8 schematically show one use state diagram in which the measuring apparatus of FIG. 4 is used in the manufacturing process of a secondary battery.

FIG. 6 shows, as an example, the case of joining (sealing) the pouch exterior material 40 (see FIG. 1) of a pouch-type battery cell. The upper pouch 41 and the lower pouch 42 may be adhered to each other at high temperature by a horn 201 and an anvil 202 at the sealing sections S. In order to inspect whether the battery cell itself or the upper pouch 41 and the lower pouch 42 are properly aligned as the object 200 to be measured, the position (distance) and/or inclined angle (tilting angle) of the object 200, etc. is measured by the sensing unit(sensor) 100. Alternatively, in order to inspect whether the horn 201 and the anvil 202 for sealing the pouch exterior material 40 are correctly aligned, the position (distance) and/or inclined angle (tilting angle) of the object 200 are measured with sensing unit(sensor) 100. At this time, the object 200 is housed in the inside of the housing 110 and foreign matters such as dust inside the housing 110 are suctioned, while the object 200 is measured by the sensing unit 100 outside the housing 110. Thereby, it is possible to prevent the occurrence of errors of the values that are sensed by exposing the light emitting part/light receiving part 101 of the sensing unit 100 to foreign matters such as dust.

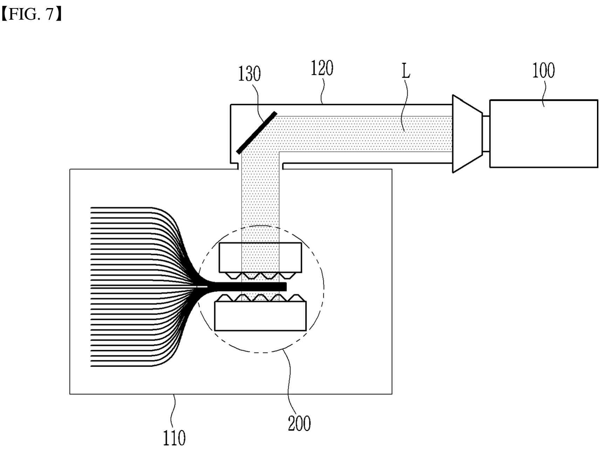

FIG. 7 schematically shows another use state diagram in which the measuring apparatus of FIG. 4 is used in the manufacturing process of a secondary battery. FIG. 7 shows, as another example, the case where a plurality of electrode tabs 20 (see FIG. 1) are joined (welded) into a tab bundle. The corresponding process device may be a laser welder or an ultrasonic welder by way of example. In order to inspect whether the electrode tab 20 and/or electrode lead 10 are properly aligned as the object 200 to be measured, the position (distance) and/or inclined angle (tilting angle) of the object 200 are measured by the sensing unit(sensor) 100. Similarly, in this case, the object 200 is housed in the inside of the housing 110 and foreign matters such as dust inside the housing 110 are suctioned, while the object 200 is measured by the sensing unit 100 outside the housing 110. Thereby, it is possible to prevent the occurrence of errors of the values that are sensed by exposing the light emitting part/light receiving part 101 of the sensing unit 100 to foreign matters such as dust.

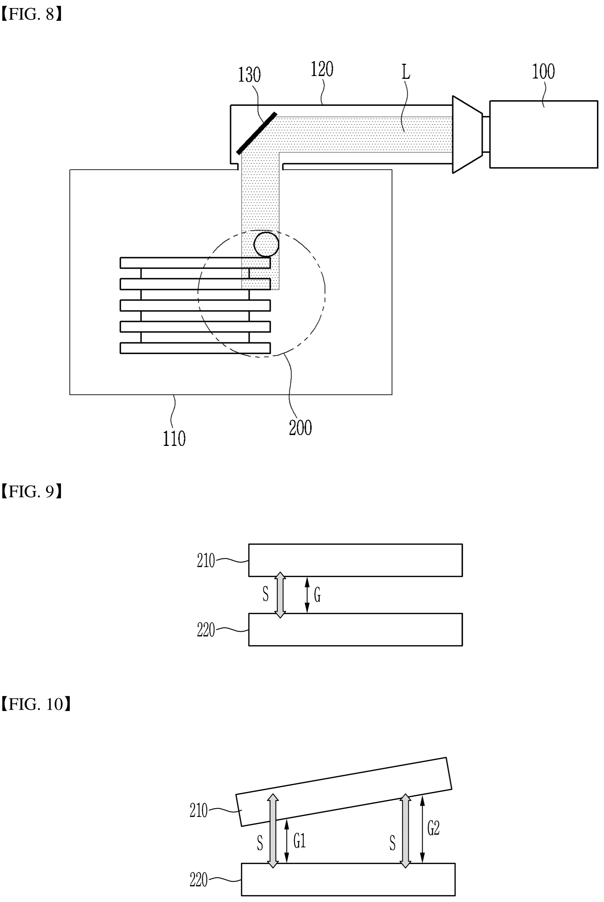

FIG. 8 schematically shows yet another use state diagram in which the measuring apparatus of FIG. 4 is used in the manufacturing process of a secondary battery. FIG. 8 shows, as another example, the case where the uncoated part of the electrode assembly 30 (see FIG. 1) is joined at high temperature. The process device may be a sealing device as an example. When performing sealing for joining between the uncoated parts of the electrode assembly 30, in order to inspect whether the electrode assembly 30 is properly aligned as the object 200 to be measured or whether the sealing device is properly aligned on the uncoated part, the position (distance) and/or inclined angle (tilting angle) of the object 200 are measured by the sensing unit (sensor) 100. Similarly, in this case, the object 200 is housed in the inside of the housing 110 and foreign matters such as dust inside the housing 110 are suctioned, while the object 200 is measured by the sensing unit 100 outside the housing 110. Thereby, it is possible to prevent the occurrence of errors of the values that are sensed by exposing the light emitting part/light receiving part 101 of the sensing unit 100 to foreign matters such as dust.

As mentioned above, examples in which the measuring apparatus of FIG. 4 is used in the manufacturing process of a secondary battery have been described with reference to FIGS. 6 to 8, but the present disclosure is not limited thereto, and can be applied to any case where the sensing unit 100 is not affected by foreign matters such as dust in the manufacturing process of a secondary battery or the actual use of the secondary battery. In addition, the sensing unit 100 is also described above as an example of a laser-type sensor, but the present disclosure is not limited thereto and can be applied to various types of sensors, such as ultrasonic type.

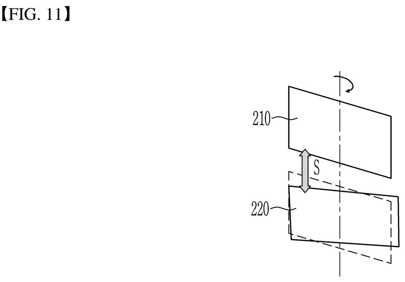

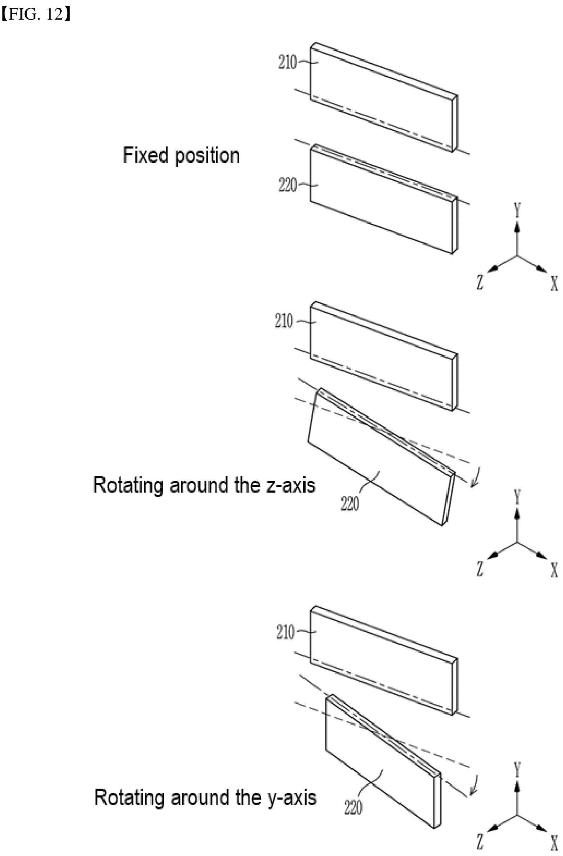

FIGS. 9 to 12 exemplarily show methods for measuring an object 200 in the sensing unit 100 of FIG. 4. S in FIGS. 9 to 11 means a sensing area. FIG. 9 exemplarily shows a case in which the gap G of the object 200 is measured in a state where the object 200 is parallel. FIG. 10 exemplarily shows a case in which the gap G of the object 200 is measured in a state where the object 200 is not parallel. FIG. 11 exemplarily shows a case in which the tilting angle of the object 200 is measured in a state where the object 200 is parallel. FIG. 12 is a more specific example of FIG. 11, which exemplarily shows a case of rotating around the z-axis and a case of rotating around the y-axis at a fixed position, respectively.

Although the invention has been described in detail above with reference to preferred embodiments thereof, it will be appreciated by those skilled in the art that the scope of the present disclosure is not limited thereto, and various modifications and improvements can be made to these embodiment without departing from the principles and sprit of the invention, the scope of which is defined in the appended claims and their equivalents.

### [Description of Symbols]

100: sensing unit
101: light emitting part/light receiving part
110: housing
111: opening
112: suction hole
113: filter
120: sensing path part
130: optical component
140: suction unit
200: object
201: horn
202: anvil

## Claims

1. A measuring apparatus for secondary battery comprising:
a sensing unit that measures an object; and
a housing that houses the object therein, and includes an opening so that the object can be detected through the sensing unit,
wherein the sensing unit is disposed outside the housing to thereby reduce or prevent foreign matters inside the housing from being transferred to the sensing unit.

2. The measuring apparatus for secondary battery according to claim 1,
further comprising a sensing path part having a passage structure that connects the sensing unit and the opening of the housing,
wherein the sensing unit measure the object inside the housing through the sensing path part.

3. The measuring apparatus for secondary battery according to claim 2, wherein:
the sensing unit is a laser sensor or an optical sensor, and
the inner wall of the sensing path part is treated with a dark film.

4. The measuring apparatus for secondary battery according to claim 2,
further comprising an optical component inside the sensing path part,
wherein the optical component includes at least one of a mirror, a lens, an aperture, and a splitter, and
a sensing path from the sensing unit is folded or bent in a partial section by the optical component to reach the object.

5. The measuring apparatus for secondary battery according to claim 1,
further comprising a suction unit that suctions air containing foreign matters inside the housing,
wherein the suction unit is integrated into the housing, or is connected to a suction hole provided in the housing through a pipe or tube.

6. The measuring apparatus for secondary battery according to claim 5, wherein:
the suction unit suctions air containing the foreign matters at predetermined time intervals or continuously.

7. The measuring apparatus for secondary battery according to claim 6,
further comprising a PM sensor (Particulate Matter Sensor) that measures the concentration of foreign matter inside the housing,
wherein if the concentration of foreign matter measured by the PM sensor is higher than a predetermined first concentration, the suction unit operates, and when the concentration of foreign matter measured by the PM sensor is lower than a predetermined second concentration, the suction unit stops, and
wherein the first concentration is higher than the second concentration.

8. The measuring apparatus for secondary battery according to claim 1, wherein:
the object is at least one of a battery cell, a component of the battery cell, and a process device for manufacturing the battery cell, and
the sensing unit is a sensor that measures at least one of the distance and angle of the object.

9. The measuring apparatus for secondary battery according to claim 8, wherein:
the process device is at least one of a welding device, a joining device, and a sealing device.

10. The measuring apparatus for secondary battery according to claim 1, wherein:
the housing is made of a transparent material.

11. The measuring apparatus for secondary battery according to claim 1, wherein:
the opening is covered with a transparent member, and
the housing is hermetically sealed.
